# EUROPEAN PATENT SPECIFICATION

(11) **EP 3 027 916 B1**
(45) Date of publication and mention of the grant of the patent: **26.02.2020**
(21) Application number: 14744929.2
(22) Date of filing: 25.07.2014
(51) Int. Cl.: F16B 37/04

(54) **NUT RETAINER**
MUTTERHALTEVORRICHTUNG
RÉTENTION D'ÉCROU

(30) Priority: 30.07.2013 GB 201313608
(43) Date of publication of application: 08.06.2016
(73) Proprietor: C P Witter Limited, Deeside Industrial Park Deeside Flintshire CH5 2NY (GB)
(72) Inventor: EDWARDS, Jonathan, Oswestry Shropshire SY10 8HN (GB)
(74) Representative: Roberts, Peter David
(86) International application number: PCT/GB2014/052283
(87) International publication number: WO 2015/015171

(56) References cited:
- DE-A1-102009 006 542
- DE-B3-102006 012 648
- GB-A- 1 273 149
- US-A- 2 940 496
- US-A1- 2007 297 869

## Description

This invention concerns a retainer device for positioning a threaded nut relative to an aperture in a component.

Vehicle towbars, for example, widely use fixed nuts or threaded inserts that are welded or fixed to the towbar. Typically they are welded to towbar components to align with a hole in the component. The fixed nut or threaded insert is used commonly because there is limited access for using a loose nut and bolt. For example, a tow bar may be supported at the rear of a vehicle by connection to chassis side rails. The tow bar has end plates to each of which one end of a respective side arm is fastened the other end being connected, in turn, to a respective chassis rail of the vehicle. Each end plate has an aperture for receipt of a bolt for connecting the side arm to the tow bar, with a threaded nut being welded or similarly fixed to the reverse face of the end plate, i.e. inside the towbar itself.

A problem with using a welded or otherwise fixed threaded nut or insert is that when painted the threads of the nut or insert are contaminated by the paint, such as a polyester powder coating. This leads to bolts becoming obstructed when inserted into the nuts, whereby the joint can be ineffective and fail. For example the bolt and nut may become cross-threaded resulting in a jam that prevents connection. Replacement of the nut is generally not possible as it is impossible to access without cutting through the tow bar or removing the end plates (which are integrally formed with the towbar by for example welding or the like). The whole towbar thus has to be replaced.

Thread protection or masking using silicone rubber inserts in the nuts is possible and at least partially effective. However, after painting it is necessary to carry out a further operation of cleaning the threads with a tap. This is a slow and hence costly process.

Another complication can arise from any pre-treatment of components prior to painting, such as shot blasting. This pre-treatment provides a better surface for painting, so that an excellent paint finish can be achieved. However, blast treatment materials can become lodged in threads and subsequently become embedded in the paint. These blast grit particles are extremely hard and make the removal of paint from threads even more difficult, so that thread jamming is almost inevitable.

In order to address this problem, GB2464308 (C P Witter Limited) discloses a fastener for a nut comprising a cage for receiving a nut, wherein the cage has a pair of tongues that extend outwardly from the cage. Each tongue has an outwardly extending lip, provided at the end of the tongue. An inwards protrusion is provided on each of the tongues for retaining the nut in the cage, for example when the cage is turned over in order to fit the nut and fastener to an aperture of a component.

In use a nut is inserted into the cage, passed the protrusions on the tongues. The tongues of the fastener are inserted through an aperture in a component and the lips at the ends of the tongues retain the fastener in the aperture by overlapping the component beyond the ends of the aperture. Accordingly, the fastener retains the nut in a position aligned with the aperture in the component. This allows a threaded nut to be attached to a component after a finishing treatment.

Another component may then be attached to the component by aligning an aperture in the other component with the aperture in the component and passing a bolt through the apertures, from the other side of the components to the fastener, and screwing the bolt into the nut. As it does so, the nut moves past the protrusions on each of the tongues, which causes the tongues to deflect outwards, thereby forcing them tightly against the walls of the component that define the aperture. This holds the fastener securely in place over the aperture.

However, the fastener suffers from the disadvantage that it is unable to be used with a wide range of different thicknesses of components.

DE 10 2009 006542 A describes an anchoring device which includes an insertion member having a trough-shaped trunk and a pocket provided at the front end of the trunk. A plate nut is inserted in the pocket and formed with a threaded hole at its portion protruding from the pocket. A seat member is fitted around the trunk. An engaging rib is formed on the inner surface of the seat member. A plurality of steps are formed on the outer surface of the trunk and arranged in the longitudinal direction of the trunk. When the seat member is moved toward the front end of the trunk, the engaging rib engages the respective steps one after another, thereby preventing the seat member from moving toward the rear end of the trunk. Any step nearer to the rear end of the trunk is smaller than any step nearer to the front end of the trunk.

An object of the present invention is to provide a means for retaining a threaded nut relative to a bore in a component after a finishing treatment that is able to accommodate a relatively wide range of thicknesses of the component.

According to a first aspect of the invention there is provided a retainer device in accordance with claim 1.

This is advantageous in that the distance between the opposed surfaces of the housing member and the support member, that attach the housing member to the component by clamping the component between the surfaces, can be varied so as to accommodate different thicknesses of the component.

Preferably the housing member comprises a first engagement member and the support member comprises a second engagement member, wherein the first and second engagement members are engageable with each other in a plurality of positions such that the support member is attachable to the housing member in said plurality of positions.

Preferably the first engagement member comprises at least one channel and the second engagement member comprises at least one tongue that is slidably receivable within the at least one channel. Alternatively, the first engagement member may comprise the at least one tongue and the second engagement member may comprise the at least one channel.

The at least one channel preferably comprises first and second channels and the at least one tongue preferably comprises first and second tongues that are slidably receivable within the first and second channels respectively.

Preferably the at least one channel is provided with a plurality of formations distributed along the length of the channel and the at least one tongue is provided with at least one co-operating formation that is engageable with the plurality of formations such that the support member is attachable to the housing member in said plurality of positions. Alternatively, the at least one tongue may be provided with a plurality of formations distributed along the length of the tongue and the at least one channel provided with at least one co-operating formation that is engageable with the plurality of formations such that the support member is attachable to the housing member in said plurality of positions.

The plurality of formations may be a plurality of teeth or grooves. The at least one co-operating formation may be at least one groove or tooth. The at least one co-operating formation may be a plurality of said co-operating formations, distributed in a length direction of the at least one channel or tongue as appropriate.

Preferably the support member is attachable to the housing member such that the opposed surfaces of the housing member and support member are movable towards each other, to said plurality of positions, but are prevented from moving away from each other by the engagement of the first and second engagement members. This is advantageous in that is allows the distance between the opposed surfaces of the housing member and support member to be varied, so as to accommodate different thicknesses of the component, while still maintaining the clamping force of the opposed surfaces on the component so as to retain the housing member on the component.

Where the first engagement member comprises said at least one channel, the at least one channel is preferably formed in a side wall of the housing member. Where the first engagement member comprises first and second channels, the first and second channels are preferably provided on opposed side walls of the housing member.

Where the second engagement member comprises said at least one tongue, the at least one tongue preferably extends from the opposed surface of the support member. Where the second engagement member comprises first and second said tongues, the first and second tongues preferably extend from opposed sides of said opposed surface of the support member.

Preferably the support member is provided with an aperture arranged such that a shaft of a bolt may pass through the aperture and into engagement with a nut received within the housing member. Preferably said aperture is provided in said opposed surface of the support member.

Preferably the support member comprises a plate and a surface of the plate forms said opposed surface of the support member. Preferably the at least one tongue extends from the plate.

According to the invention, the housing member comprises a formation that is engageable with the bolt as the bolt is screwed into a nut received in the housing member such that the housing member is attached to the bolt.

Preferably the formation is a bore. Preferably the bore has a generally curved cross sectional shape provided with at least one lobed portion. Preferably the bore is provided with a plurality of said lobed portions distributed in the circumferential direction of the cross sectional shape of the bore.

Preferably the housing member is provided with at least one protrusion for engagement with the bore in the component so as to prevent rotation of the housing member relative to the component when a bolt is screwed into the nut. Preferably the at least one protrusion comprises first and second protrusions. Preferably the first and second protrusions are opposed to each other.

According to the invention, the housing member is provided with an aperture through which a surface of a nut received within the housing member is contactable with the component. Preferably the aperture is arranged such that a nut is receivable into the housing member through the aperture.

Preferably the aperture is provided in said opposed surface of the housing member.

Preferably the housing member forms an enclosure that substantially encloses a nut received within the housing member apart from a surface of the nut that contacts the component through the aperture. This is advantageous in that it prevents corrosion of the nut.

Preferably the housing member is made from a corrosion resistant material. Preferably the housing member is made from High-density polyethylene (HDPE). The housing member may be made from any material suitable for injection moulding such as Acrylonitrile-Butadiene-Styrene ABS, Nylon PA, Polycarbonate PC, Polypropylene PP, Polystyrene GPPS, or Light metal alloys, for example.

According to a second aspect of the invention there is provided a fastener assembly in accordance with claim 11

According to a third aspect of the invention there is provided a component in accordance with claim 12.

According to a fourth aspect of the invention there is provided a method in accordance with claim 13.

According to a fifth aspect of the invention there is provided a method in accordance with claim 15.

A specific embodiment of the present invention will now be described, by way of example only, with reference to the accompanying drawings in which:
Figure 1 shows a front perspective view of a first component partially fitted with a fastener assembly according to the present invention;
Figure 2 shows a lower front perspective view of a housing member of the fastener assembly shown in figure 1, with a nut of the fastener assembly removed for illustrative purposes;
Figure 3 shows an under plan view of the housing member shown in figure 2;
Figure 4 shows a cross-sectional view of the housing member shown in figure 3 taken along the line A-A in figure 3 where a nut is received within a nut receiving part of the housing member;
Figure 5 shows a nut of the fastener assembly shown in figure 1;
Figure 6 shows a view corresponding to that of figure 2 but where the nut of figure 5 is received within the housing member of figure 2;
Figure 7 shows a lower perspective view of a support member of the fastener assembly shown in figure 1;
Figure 8 shows an upper perspective view of the support member shown in figure 7;
Figure 9 shows a plan elevational view of the first component of figure 1;
Figures 10a to 10e show the sequential steps in a method of attaching the fastener assembly of Figure 1 to the first component of Figure 1; and
Figure 10f show the step of attaching a second component to the attached fastener assembly and first component produced by the method of Figures 10a to 10e, to form a component assembly.

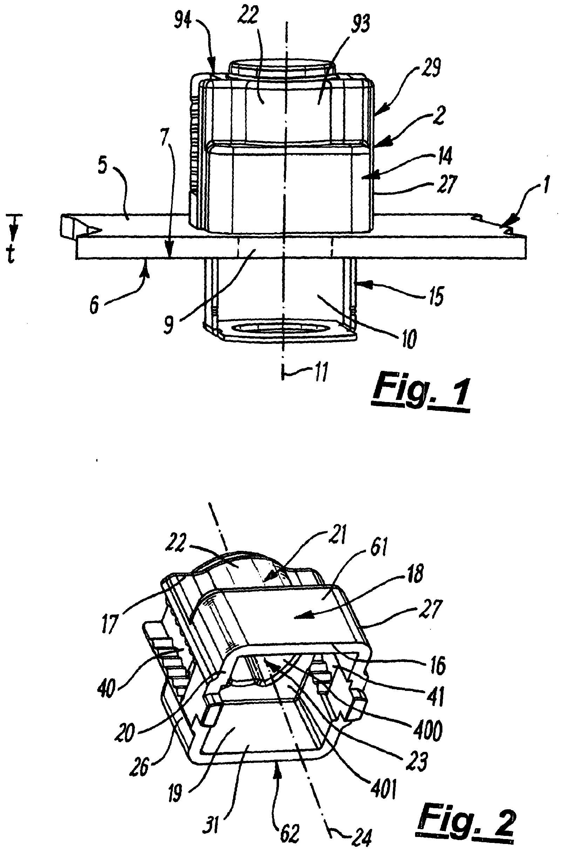

Referring to figure 1 there is shown a front perspective view of a first component 1 fitted with a fastener assembly 2 according to the present invention.

The first component 1 is in the form of a first plate 1. The first plate 1 is elongate and extends in a thickness direction ('t') from a first surface 5 to a second surface 6. The first plate 1 is substantially flat and extends in a flat plane.

The first plate 1 is provided with a bore 9 that extends through the thickness of the plate 1 from its first surface 5 to its second surface 6. The bore 9 terminates as first and second apertures provided in the first surface 5 and the second surface 6 of the plate 1 respectively. The bore 9 is generally elongate and extends along a longitudinal axis 11. The longitudinal axis 11 of the bore 9 is substantially perpendicular to the plane in which the plate 1 extends. In this respect, the longitudinal axis 11 of the bore 9 is substantially perpendicular to the first and second surfaces 5, 6 of the first plates 1. The bore 9 is defined by an inner surface of the plate 1. The cross-sectional shape of the bore 9 will be described in further detail below.

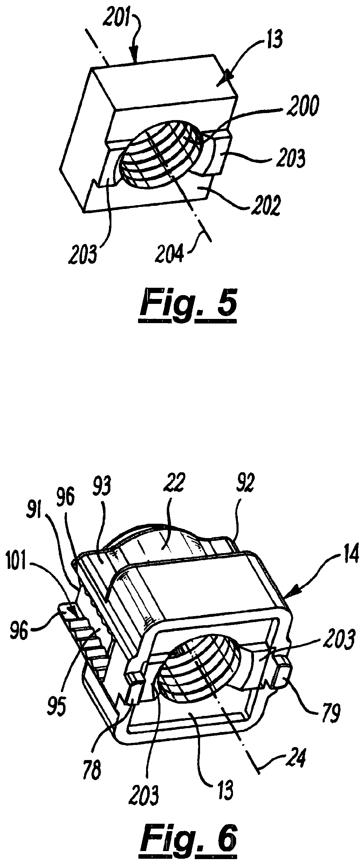

The fastener assembly 2 comprises a retainer device 29 and a threaded nut 13 received within the retainer device 29 (see Figure 6).

The retainer device 29 comprises a housing member 14 and support member 15. The housing member 14 comprises a generally thin walled body that defines a substantially hollow enclosure. The housing member 14 extends from a first end 16 to a second end 17 in an axial direction along a longitudinal axis 24 (see Figure 2).

A first section of the housing member 14, that extends from the first end 16 of the housing member 14 to substantially half way along the axial length of the housing member 14, forms a nut receiving part 18 of the housing member 14. The nut receiving part 18 is a generally thin walled body that defines a substantially hollow cube centered on the longitudinal axis 24. The nut receiving part 18 is for receiving a threaded nut 13 (see below). The nut receiving part 18 has a first pair of opposed first and second surfaces 26, 27 that extend in a length direction of the housing member 14 (as well as in the axial direction 24) and a second pair of opposed first and second surfaces 61, 62 that extend in a width direction of the housing member 14 (as well as in the axial direction 24).

The first end 16 of the housing member 14 comprises a substantially square surface 20, facing outwardly in the axial direction 24, with a substantially square aperture 19 provided centrally in said surface 20. The surface 20 forms a substantially square rim around the aperture 19. The rim is substantially flat, lies in the plane of the aperture 19 and faces outwardly in the axial direction 24. The aperture 19 extends inwardly from the first end 16 of the housing member 14 in the axial direction 24, to a second section 21 of the housing member 14 (see below) to form a bore 31 of a substantially square cross section centered on the longitudinal axis 24 of the housing member 14.

A second section 21 of the housing member 14 extends from an end of the nut receiving part 18 that is distal to the first end 16 of the housing member 14, in the axial direction 24, to the second end 17 of the housing member 14.

The outer surface of the second section 21 has a generally cuboidal shape, having a substantially rectangular cross-sectional shape centered on the longitudinal axis 24. The outer surface has a first pair of opposed first and second surfaces 91, 92 that extend in the length direction of the housing member 14 (and the axial direction 24) and form the shorter sides of the rectangular cross-section of the outer surface.

The outer surface has a second pair of first and second opposed surfaces 93, 94 that extend in the width direction (and the axial direction) and form the longer sides of the rectangular cross-section of the outer surface.

The first pair of first and second opposed surfaces 91, 92 of the second section 21 are substantially parallel and substantially aligned, in the width direction of the housing member 14, with the first pair of first and second opposed surfaces 26, 27 of the nut receiving part 18 respectively. The first pair of first and second opposed surfaces 91, 92 of the second section 21 are shorter, in the length direction of the housing member 14, than the first and second opposed surfaces 26, 27 of the nut receiving part 18 respectively. Accordingly, the second pair of opposed surfaces 93, 94 of the second section 21 are spaced inwardly in the length direction of the housing member 14 from the second pair of opposed first and second surfaces 61, 62 of the nut receiving part 18.

The second pair of first and second opposed surfaces 93, 94 of the second section 21 are substantially parallel with the second pair of first and second opposed surfaces 61, 62 of the nut receiving part 18 respectively.

Each of the second pair of opposed surfaces 93, 94 of the second section 21 is provided with a radially outward extending bulge 22 (relative to the longitudinal axis 24). Each radially outward bulge 22 is centered substantially midway along the length of the respective surface 93, 94 in the width direction of the housing member 14.

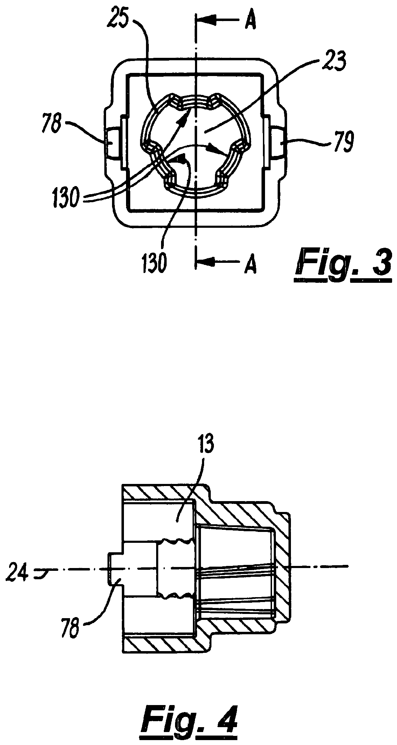

The second section 21 is generally solid, provided with a bore 23 defined by a radially facing inner surface 400 of the second section 21 (see Figures 3 and 4). The bore 23 extends in the direction of the longitudinal axis 24 of the housing member 14 from a first end of the second section 21, that is proximal to the nut receiving part 18 of the housing member 14, to a second end that is axially inboard of the second end 17 of the housing member 14. An axially facing inner surface 401 of the second section 21 forms a rim around the bore 23.

Referring to Figure 3, the bore 23 has a generally curved cross-sectional shape, centered on the longitudinal axis 24, provided with three lobed portions 25 distributed circumferentially about the axis 24. Each lobed section 25 is generally concave, centered on the axis 24. Intermediate portions 130 of the bore are provided between adjacent lobed portions 25. Each intermediate portion 130 is generally concave, centered on the axis 24 and has a smaller radius of curvature than each lobed portion 25. The lobed portions 130 and the intermediate portions 130 are arranged such that they are enagageable with a bolt, as the bolt is screwed into a nut 13 received in the housing member 14, such that the housing member is attached to the bolt, as described below.

The radially outward extending bulge 22 in the second pair of opposed surfaces 93, 94 of the outer surface of the second section 21 accommodates the bore 23.

A first channel 40 is provided within, and extends along, the first surfaces 26, 91 of the first pair of opposed surfaces of the nut receiving part 18 and the second section 21 of the housing member 14. The channel 40 is provided substantially midway along the length of said first surfaces 26, 91 in the length direction of the housing member 14 and extends from the first end 16 of the housing member 14, in the axial direction 24, to the second end 17 of the housing member 14.

Similarly, a second channel 41 is provided within, and extends along the second surfaces 27, 92 of the first pair of opposed surfaces of the nut receiving part 18 and the second section 21 of the housing member 14. The channel 42 is provided substantially midway along the length of said second sides 27, 92 in the length direction of the housing member 14 and extends in a longitudinal direction from the first end 16 of the housing member 14, in the axial direction 24, to the second end 17 of the housing member 14.

Each channel 40, 41 has a substantially U-shaped cross sectional shape, having a base 95 and opposed surfaces 96. A longitudinal section of the base 95 is formed by the outer surface of the second section 22 of the housing member 14. A section of each channel 40, 41 that passes from the second end 17 of the housing member 14 to a position axially inboard of the first end 16 of the housing member 14 extends, in the width direction of the housing member 14, through the thickness of the wall of the housing member 14 to form an open channel 40, 41.

A section of each channel 40, 41 provided towards the first end 16 of the housing member 14 does not extend through the thickness of the wall of the housing member 14 such that said section of the channel 40, 41 is closed by said wall.

Each channel 40, 41 is provided with a plurality of teeth 101, distributed substantially along the length of the channel 40, 41 (in the axial direction 24) on the opposed surfaces 96 of the channel 40, 41.

First and second sides of the surface 20 of the first end 16 of the housing member 14, that are formed by the first and second surfaces 26, 27 of the nut receiving part 18 are provided, substantially midway along their length, with first and second protrusions 78, 79 respectively (see figure 6). The first and second protrusions 78, 79 extend outwardly from the surface 20 in the axial direction 24. The first and second protrusions 78, 79 have a generally trapezoidal cross sectional shape about said axis 24.

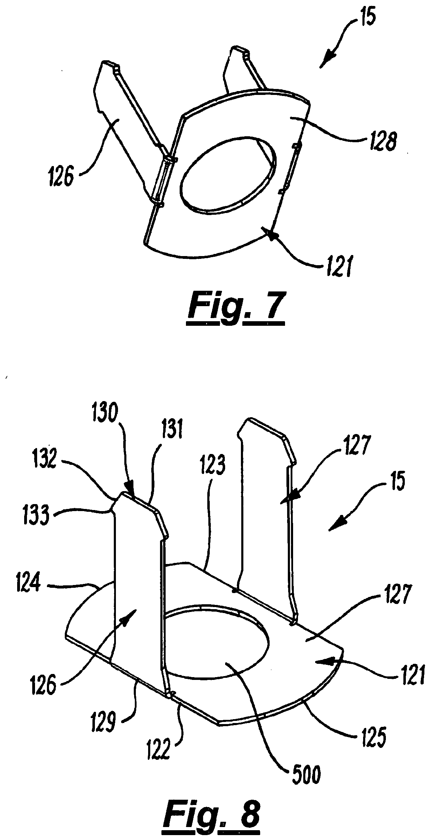

Referring now to figures 7 and 8, the support member 15 comprises a substantially flat plate 121 that extends in a thickness direction from a first surface 127 to a second surface 128. The first and second surfaces 127, 128 are substantially flat. The plate 121 extends substantially within a plane. The plate 121 has a first pair of opposed first and second sides 122, 123, that are substantially straight and substantially parallel to each other.

The first pair of first and second sides 122, 123 are bounded at either end by a second pair of first and second sides 124, 125. The second pair of first and second sides walls 124, 125 are concavely curved about the centre of the plate 121.

A substantially circular bore 500 is provided in the centre of the plate 121 and extends from the first surface 127 of the plate 121 to the second surface 128. The bore 500 is sized and dimensioned to allow the passage of a bolt for the nut 13.

The support member 15 further comprises first and second tongues 126, 127 provided substantially midway along the length of the first and second parallel sides 122, 123 of the plate 121. The first and second tongues 126, 127 are generally elongate and extend substantially perpendicular to the plane of the plate 121 along a longitudinal axis. The first and second tongues 126, 127 are substantially perpendicular to the first surface 127 of the plate 121.

Each tongue 126, 127 extends from a first end 129, attached to the first and second sides 122, 123 of the plate 121 respectively, to a second end that is distal to the plate 121. The second end of each tongue 126, 127 forms a protrusion 130.

Each protrusion 130 has a generally trapezoidal shape, having an upper surface 131 that extends substantially parallel to the first or second parallel sides 122, 123 of the plate 121 respectively bounded on either side by first and second side surfaces 132 that extend in the axial direction of the tongue 126, 127 at an angle of approximately 45° relative to said axial direction. Each side surface 132 forms a lip 133 where it joins the lower portion of the tongue 126, 127.

Referring now to figure 5 there is shown the nut 13 of the fastener assembly 2. The nut 13 is an internally threaded square nut. However, it will be appreciated that a nut of any suitable shape may be used.

The nut 13 comprises a threaded cylindrical bore 200 that extends from a first surface 201 to a second surface 202 of the nut 13 along a longitudinal axis 204. The second surface 202 of the nut 13 is provided with first and second protrusions 203. The first and second protrusions 203 are radially opposed to each other about said axis 204. Each protrusion 203 protrudes from the second surface 202 of the nut 13 in the axial direction 204. Each protrusion 203 has a generally rectangular cross-sectional shape about said axis but the longer sides of the rectangle that are proximal to the axis 204 are concavely curved about said axis 204.

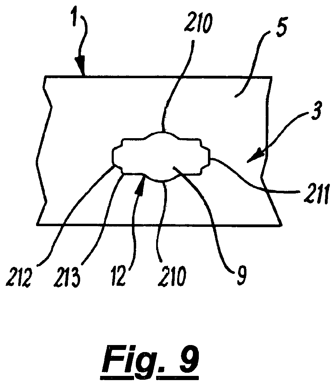

Referring to figure 9, there is shown a plan elevational view of the first plate 1. The bore 9 in the first plate 3 terminates at the first surface 5 of the first plate 3 as an aperture 12. The bore 9 has a generally rectangular cross-sectional shape, about its axis 11 where each side of the rectangle is provided with a radially outward extending bulge 210, 211 (relative to the axis 11). Each radially outward bulge 210, 211 is centered substantially midway along the length of the respective side of the rectangle.

Each bulge 210 provided on the longer sides of the rectangular cross-sectional shape is concavely curved about said axis 11. The region bordered by the bulge 210 is to accommodate a bolt for the nut 13.

Each bulge 211 of the shorter sides of the rectangular cross-sectional shape of the bores 9, 10 has a radially outer section 212 and a radially inner section 213 (relative to the axis 11 of the bore 9).

Each radially outer section 212 has a generally trapezoidal shape and is shaped to form a close fit with the first or second protrusions 78, 79 of the surface 20 of the first end 16 of the housing member 14 respectively, such that when a bolt is screwed into the nut (see below) the engagement of the inner surface of the plate 1 that defines the radially outer section 212 engages with the first or second protrusions 78, 79 respectively, so as to prevent the housing member 14 from rotating relative to the first plate 3.

Each radially inner section 213 is shaped to receive the first or second protrusions 203 of the nut 13 respectively, such that when a bolt is screwed into the nut 13 (see below) the engagement of the inner surface of the plate 1 that defines the radially inner section 213 engages with the first or second protrusions 203 respectively, so as to prevent the nut 13 from rotating relative to the first plate 1.

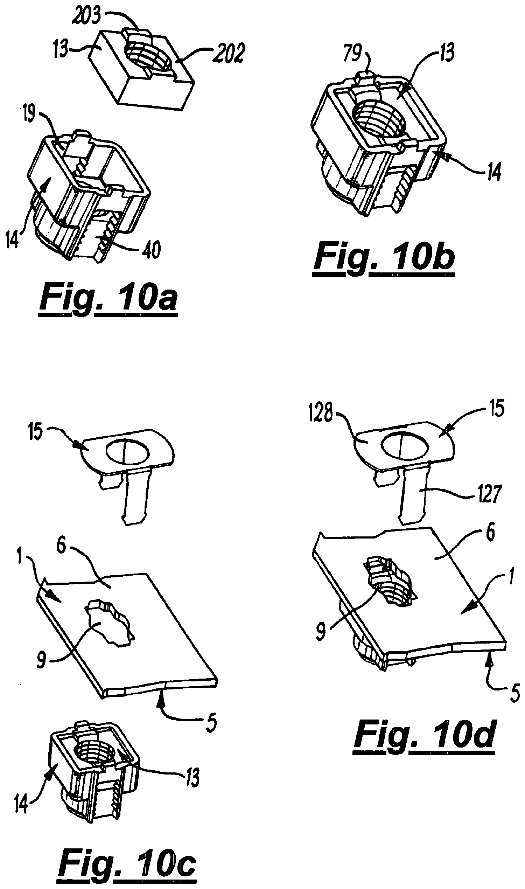

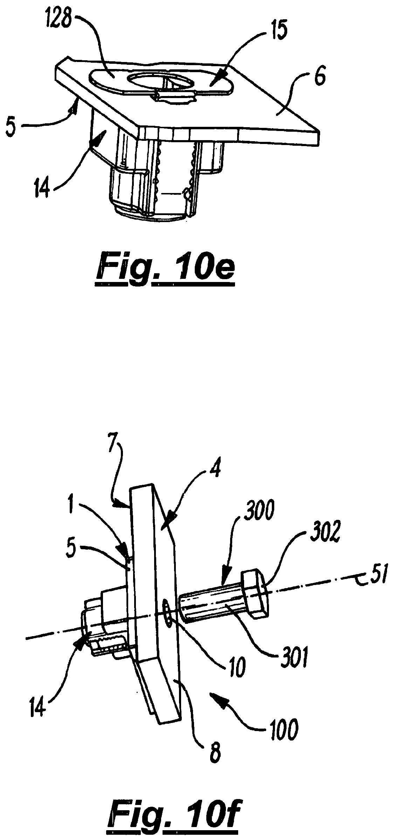

Referring now to figures 10a to 10e there is shown the sequential steps in a method of attaching the fastener assembly 2 to the first plate 1. As shown in Figure 10a and 10b, as a first step the nut 13 is received within the aperture 19 provided in the surface 20 of the first end 16 of the housing member 14, into said bore 31. The aperture 19, and bore 31, are sized and dimensioned so that the nut 13 may be received through the aperture 19 into the nut receiving part 18 of the housing member 14. When the nut 13 is received within the nut receiving part 18 of the housing member 14, the first surface 201 of the nut 13 contacts the axially facing inner surface 401 of the second section 21. The second surface 202 of the nut 13 faces out of the aperture 19. The first and second protrusions 203 of the nut 13 are positioned radially adjacent to, and inwardly of, the first and second protrusions 78, 79 of the surface 20 of the first end 16 of the housing member.

Referring now to Figures 10c to 10d, once the nut 13 is received within the nut receiving part 18 of the housing member 14, the housing member 14 is then mounted on the first surface 5 of the first plate 1 such that the surface 20 at the first end 16 of the housing member 14 is in contact with the first surface 5 of the first plate 1. The housing member 14 is mounted over the bore 9. The second surface 202 of the nut 13, that faces out of the aperture 19, also contacts the first surface 5 of the first plate 1.

When the housing member 14 is mounted on the first surface 5 of the first plate 1, the first and second protrusions 78, 79 of the housing member 14 are received within the radially outer sections 212 of the bore 9, to form said close fit. In addition, the first and second protrusions 203 of the nut 13 are received within the radially inner sections 213 of the bore 9, to form said close fit.

The support member 15 is then attached to the housing member 14 from the side of the second surface 6 of the first plate 1. Specifically, the tongues 126, 127 of the support member 15 are passed through the radially inner sections 213 of the bore 9 and are slidably received within the first and second channels 40, 41 respectively, passing between the first and second protrusions 203 of the nut 13 and the first and second protrusions 78, 79 of the housing member 14.

When the tongues 126, 127 are received within the channels 40, 41 the first surface 127 of the plate 121 of the support member 15 is opposed to the surface 20 of the first end 16 of the housing member 14.

As each tongue 126, 127 is received within the respective channel 40, 41, the protrusion 130 of the tongue 126, 127 engages with the teeth 101 of the channel 40, 41. The protrusions 130 are engageable with the teeth 101 in a plurality of axial positions such that the distance between the opposed surfaces 127, 20 of the support member 15 and the housing member 14 is varied.

As the tongues 126, 127 are received further within the channels 40, 41 the first surface 127 of the support member 15 approaches said surface 20 of the first end 16 of the housing member 14 until said surface 127 of the support member 15 abuts against the second surface 6 of the first plate 1. This attaches the housing member 14 to the first plate 1 by clamping the first plate 1 between said surface 20 of the first end 16 of the housing member 14 and the first surface 127 of the plate 121 of the support member 15. Accordingly, the housing member 14 is retained in position, relative to the bore 9 by the support member 15.

Because the protrusions 130 are engageable with the teeth 101 in a plurality of positions, such that the distance between the opposed surfaces 127, 20 of the support member 15 and the housing member 14 is varied, this enable the fastener assembly 2 to accommodate different thicknesses of the first plate 1.

In this respect, the protrusion 130 forms a ratcheted engagement with the teeth 101 such that the tongues 126, 127 may be received further within the channels 40, 41, so as to reduce the distance between the opposed surfaces 127, 20 of the support member 15 and the housing member 14 but are prevented from being removed back out of the channels 40, 41, so as to increase the distance between said opposed surfaces 127, 20. This is advantageous in that is allows the distance between the opposed surfaces 127, 20 to be varied, so as to accommodate different thicknesses of the first plate 1, while still maintaining the clamping force of the opposed surfaces so as to retain the housing member 14 on the first plate. In the described embodiment the fastener assembly 2 can be used with a first plate having a thickness in the range 2 to 12mm. It will be appreciated that, through appropriate design, different thickness ranges could be accommodated.

Referring now to Figure 10f, there is shown a method of attaching a second component 4, in the form of a second plate 4 to the attached fastener assembly 2 and first plate 1 to form a component assembly 100.

The second plate 4 is elongate and extends in a thickness direction from a first surface 7 to a second surface 8. The plate 3 4 is substantially flat and extends in a respective plane.

The second plate 4 is provided with a substantially cylindrical bore 10 that extends through the thickness of the plate 4 from its first surface 7 to its second surface 8. The bore 10 terminates as first and second apertures provided in the first and second surfaces 7, 8 of the plate 4. The bore 10 is generally elongate and extends along a longitudinal axis 51. The longitudinal axis 51 the bore 10 is substantially perpendicular to the plane in which the plate 4 extends. In this respect, the longitudinal axis 51 of the bore 10 is substantially perpendicular to the first and second surfaces 7, 8 of the second plate 4. The bore 10 is defined by an inner surface of the plate 4.

In order to attach the first and second plates 1, 4 together, to form a component assembly 100, the first and second plates 1, 4 are placed adjacent to each other such that the second surface 6 of the first plate 1 is adjacent and opposed to the first surface 7 of the second plate 4, with the bores 9, 10 of the first and second plates 1, 4 substantially aligned. The first and second plates 1, 4 are substantially parallel to each other and extend in a common plane. The plate 121 of the support member 15 is disposed between the second surface 6 of the first plate 1 and the first surface 7 of the second plate 4.

The bores 9, 10 in the first and second plates 3, 4 form a substantially continuous bore. A shaft 301 of a threaded bolt 300 is then passed through the aperture in the second surface 8 of the second plate 4, through the bore 10 in the second plate 4, through the bore 500 in the plate 121 of the support member 15, through the bore 9 in the first plate 1 and into engagement with the nut 13 in the housing member 14. As the bolt 300 is screwed into the nut 13, the first and second plates 1, 4 are clamped together, between a head 302 of the bolt 300 and the second surface 202 of the nut 13.

As the bolt 300 is screwed into the nut 13, the shaft 301 of the bolt 300 extends past the first surface 201 of the nut 13 and engages with the bore 23 in the second section 21 of the housing member 14.

Specifically, the threaded section of the bolt engages with the radially facing inner surface 400 of the second section 21 that defines the lobed portions 25 and the intermediate portions 130 of the bore 23. As the bolt 300 rotates it cuts a thread into the lobed portions 25. This is advantageous in that it fixedly attaches the housing member 14 to the bolt 300, which prevents the bolt working loose in use due to vibration. This removes the need to use a conventional locking device such as a 'Nyloc Nut', which could not be welded to the first plate 1 as heat from the welding would melt the plastic locking mechanism of the nut.

The housing member 14 forms an enclosure that substantially encloses the nut 13, apart from the second surface 202 of the nut 13. This is advantageous in that it prevents corrosion of the nut 13. The housing member is made from High-density polyethylene (HDPE). However, it will be appreciated that it may be made from any corrosion resistant material. The housing member may be made from a material suitable for injection moulding such as Acrylonitrile-Butadiene-Styrene ABS, Nylon PA, Polycarbonate PC, Polypropylene PP, Polystyrene GPPS, or light metal alloys, for example.

In view of the above, it can be seen that the retainer device 29 provides a retainer device for positioning a threaded nut relative to a bore in a first component, for attachment of a threaded bolt, that is able to accommodate different thicknesses of the first component. The retainer device also protects the nut from corrosion.

In the described embodiment, the first plate 1 is a side plate of a tow bar frame and the second plate 4 is a plate of vehicle chassis.

The described and illustrated embodiments are to be considered as illustrative and not restrictive in character, it being understood that only the preferred embodiments have been shown and described and that all changes and modifications that come within the scope of the inventions as defined in the claims are desired to be protected.

For example, in the above described embodiment the housing member 14 is provided with the first and second channels 40, 41 and the support member 15 is provided with first and second tongues 126, 127 that are slidably engageable with the first and second channels 40, 41 of the housing member 14. Alternatively, in a reciprocal arrangement, the first and second channels 40, 41 may be provided in the support member 15, with the tongues 126, 127 provided on the housing member 14.

Furthermore, in the above described embodiment the first and second channels 40, 41 are provided with a plurality of teeth 101 distributed in the length direction of the channel 40, 41. Each tongue 126, 127 is provided with a single protrusion 130 that is engageable with the teeth 101 in a plurality of axial positions. Alternatively, each channel 40, 41 may be provided with a single tooth or groove, with each tongue 126, 127 provided with a plurality of protrusions, teeth, or grooves that are engageable with the teeth or groove of the first and second channels 40, 41 in a plurality of axial positions.

In the described embodiment, the first and second components are first and second plates 1, 4. However it will be appreciated that the first and second components may be any type of component that can be attached to each other, including a block, or any other component. In addition, in the described embodiment the plate 1 is a side plate of a tow bar and the second plate 4 is a plate of vehicle chassis. Alternatively, the plate 1 may be a plate of vehicle chassis and the second plate 4 may be a side plate of a tow bar.

## Claims

1. A retainer device (29), for positioning a threaded nut relative to a bore in a component (1) for attachment of a threaded bolt, comprising a housing member (14) for receiving a threaded nut and a support member (15) that is attachable to the housing member so as to attach the housing member to the component by clamping the component between opposed surfaces of the housing member and the support member, wherein the support member is attachable to the housing member in a plurality of positions in which the distance between the opposed surfaces of the support member and the housing member is varied, and wherein the housing member is provided with an aperture (19) through which a surface of a nut received within the housing member is contactable with the component and wherein the housing member comprises a formation (23) that is engageable with the bolt as the bolt is screwed into a nut received in the housing member such that the housing member is attached to the bolt.

2. A retainer device (29) according to claim 1 wherein the housing member (14) comprises a first engagement member (40, 41) and the support member comprises a second engagement member (126, 127), wherein the first and second engagement members are engageable with each other in a plurality of positions such that the support member (15) is attachable to the housing member in said plurality of positions.

3. A retainer device (29) according to claim 2 wherein the first engagement member (40, 41) comprises at least one channel and the second engagement member (126, 127) comprises at least one tongue that is slidably receivable within the at least one channel, and optionally wherein the at least one channel comprises first and second channels and the at least one tongue comprises first and second tongues that are slidably receivable within the first and second channels respectively.

4. A retainer device (29) according to claim 3 wherein the at least one channel (40, 41) is provided with a plurality of formations distributed along the length of the channel and the at least one tongue (126, 127) is provided with at least one co-operating formation (133) that is engageable with the plurality of formations such that the support member (15) is attachable to the housing member (14) in said plurality of positions, and/or wherein the support member is attachable to the housing member such that the opposed surfaces of the housing member and support member are movable towards each other, to said plurality of positions, but are prevented from moving away from each other by the engagement of the first and second engagement members.

5. A retainer device (29) according to any preceding claim, wherein the housing member (14) is provided with at least one protrusion (203) for engagement with a bore (9) in the component (1) so as to prevent rotation of the housing member relative to the component when a bolt is screwed into a nut received within the housing member.

6. A retainer device (29) according to any preceding claim, wherein the support member (15) is provided with an aperture (500) arranged such that a shaft of a bolt may pass through the aperture and into engagement with a nut received within the housing member (14).

7. A retainer device (29) according to any preceding claim wherein the formation (23) is a bore.

8. A retainer device (29) according to claim 7 wherein the bore (23) has a generally curved cross sectional shape provided with at least one lobed portion (25), and optionally wherein the bore is provided with a plurality of said lobed portions distributed in the circumferential direction of the cross sectional shape of the bore.

9. A retainer device (29) according to any preceding claim, wherein the aperture (19) is arranged such that a nut is receivable into the housing member (14) through the aperture, and optionally wherein the aperture is provided in said opposed surface of the housing member, and optionally
wherein the housing member forms an enclosure that substantially encloses a nut received within the housing member apart from a surface of the nut that contacts the component (1) through the aperture.

10. A retainer device (29) according to any preceding claim, wherein the housing member (14) is made from a corrosion resistant material.

11. A fastener assembly (2) comprising a retainer device (29) according to any preceding claim and a threaded nut (13) received in the housing member (14) of the retainer device, and optionally wherein a surface of the nut that is contactable with the component (1) through the aperture (19) in the housing member is provided with at least one protrusion (203) for receipt within a bore in the component so as to prevent rotation of the nut relative to the component when a bolt is screwed into the nut.

12. A component (1) fitted with a fastener assembly (2) according to claim 11 wherein a bore (9) is provided in the component that extends from a first surface (5) to a second surface (6) of the component, the housing member (14) of the fastener assembly is mounted to the first surface of the component such that a surface of the housing member contacts said first surface and the support member (15) of the fastener assembly is attached to the housing member such that a surface of the support member is opposed to the surface of the housing member and contacts the second surface of the component such that the housing member is attached to the component by clamping the component between said opposed surfaces of the housing member and support member, and optionally;
wherein the support member is passed through the bore in the component, from the side of the second surface of the component, and optionally;
wherein the retainer device of the fastener assembly is a retainer device according to any preceding claim wherein a nut received within the housing member contacts the first side of the component through the aperture (19) in the housing member, and optionally;
wherein the retainer device of the fastener assembly is a retainer device according to claim 5, wherein the bore (9) of the component has at least one first section that is shaped to receive the at least one protrusion (203) of the housing member so as to prevent rotation of the housing member relative to the component when a bolt is screwed into the nut, and optionally;
wherein the bore of the component has at least one second section that is shaped to receive the at least one protrusion on said surface of the nut so as to prevent rotation of the nut relative to the component when a bolt is screwed into the nut, and optionally;
wherein said component forms a first component, and a second component (4) provided with a bore (10) that extends from a first surface (7) to a second surface (8) of the component, wherein the first and second components are arranged such that the second surface of the first component is adjacent and opposed to the first surface of the second component and their respective bores are in alignment, wherein a bolt passes from the side of the second surface of the second component through the aligned bores into engagement with the nut received within the housing member (14), and optionally;
wherein the retaining device (29) is a retaining device according to claim 7 and wherein the bolt is engaged with the formation of the housing member.

13. A method of attaching a fastener assembly (2) according to claim 11 to a component (1) provided with a bore (9) that passes from a first surface (5) to a second surface (6) of the component, the method comprising the steps of mounting the housing member (14) to the first surface of the component, attaching the support member (15) to the housing member and adjusting the separation of the opposed surfaces of the housing member and support member such that the housing member is attached to the component by clamping the component between the opposed surfaces of the housing member and the support member.

14. A method according to claim 13 wherein the support member (15) is passed through the bore (9) in the component (1) from the side of the second surface (6) of the component, and/or wherein the retainer device (29) is a retainer device according to claim 5, wherein the at least one protrusion (203) of the housing member (14) is received within at least one first section of the bore in the component, and/or wherein at least one protrusion on the nut is received within at least one second section of the bore in the component.

15. A method of attaching a first component (1) to a second component (4) comprising the steps of the method according to any of claims 13 to 14 wherein the component forms the first component and the method further comprises providing a second component that has a bore (10) that extends from a first surface (7) to a second surface (8) of the component, arranging the first and second components such that a second surface (6) of the first component is adjacent and opposed to the first surface of the second component and their respective bores are in alignment, and passing a bolt from the side of the second surface of the second component through the aligned bores into engagement with the nut received within the housing member, and optionally wherein the retaining device (29) is a retaining device according to claim 7 and wherein the bolt is engaged with the formation (23) of the housing member (14).

## Patentansprüche

1. Haltevorrichtung (29) zum Positionieren einer Gewindemutter relativ zu einer Bohrung in einem Bauteil (1) zur Befestigung eines Gewindebolzens, umfassend ein Gehäuseelement (14) zur Aufnahme einer Gewindemutter und ein Stützelement (15), das an dem Gehäuseelement befestigbar ist, um das Gehäuseelement an dem Bauteil durch Klemmen des Bauteils zwischen gegenüberliegenden Oberflächen des Gehäuseelements und des Stützelements zu befestigen, wobei das Stützelement an dem Gehäuseelement in einer Vielzahl von Positionen befestigbar ist, in denen der Abstand zwischen den gegenüberliegenden Oberflächen des Stützelements und des Gehäuseelements variiert wird, und wobei das Gehäuseelement mit einer Öffnung (19) versehen ist, durch die eine Oberfläche einer in dem Gehäuseelement aufgenommenen Mutter mit dem Bauteil in Kontakt gebracht werden kann und wobei das Gehäuseelement eine Ausbildung (23) aufweist, die mit dem Bolzen in Eingriff gebracht werden kann, wenn der Bolzen in eine in dem Gehäuseelement aufgenommene Mutter derart eingeschraubt wird, dass das Gehäuseelement an dem Bolzen befestigt wird.

2. Haltevorrichtung (29) nach Anspruch 1, wobei das Gehäuseelement (14) ein erstes Eingriffselement (40, 41) und das Stützelement ein zweites Eingriffselement (126, 127) umfasst, wobei das erste und das zweite Eingriffselement in einer Vielzahl von Positionen miteinander in Eingriff gebracht werden können, sodass das Stützelement (15) an dem Gehäuseelement in der Vielzahl von Positionen befestigbar ist.

3. Haltevorrichtung (29) nach Anspruch 2, wobei das erste Eingriffselement (40, 41) mindestens einen Kanal und das zweite Eingriffselement (126, 127) mindestens eine Zunge aufweist, die innerhalb des mindestens einen Kanals verschiebbar aufnehmbar ist, und optional wobei der mindestens eine Kanal erste und zweite Kanäle aufweist und die mindestens eine Zunge erste und zweite Zungen aufweist, die innerhalb des ersten bzw. zweiten Kanals verschiebbar aufnehmbar sind.

4. Haltevorrichtung (29) nach Anspruch 3, wobei der mindestens eine Kanal (40, 41) mit einer Vielzahl von über die Länge des Kanals verteilten Ausbildungen versehen ist und die mindestens eine Zunge (126, 127) mit mindestens einer zusammenwirkenden Ausbildung (133) versehen ist, die mit der Vielzahl von Ausbildungen derart in Eingriff gebracht werden kann, dass das Stützelement (15) an dem Gehäuseelement (14) in der Vielzahl von Positionen befestigbar ist, und/oder wobei das Stützelement so an dem Gehäuseelement befestigbar ist, dass die einander gegenüberliegenden Flächen des Gehäuseelements und des Stützelements in die Vielzahl der Positionen aufeinander zu bewegbar sind, aber durch das Einrasten des ersten und zweiten Eingriffselements daran gehindert werden, sich voneinander wegzubewegen.

5. Haltevorrichtung (29) nach einem der vorhergehenden Ansprüche, wobei das Gehäuseelement (14) mit mindestens einem Vorsprung (203) zum Eingriff mit einer Bohrung (9) im Bauteil (1) versehen ist, um eine Drehung des Gehäuseelements relativ zum Bauteil zu verhindern, wenn ein Bolzen in eine innerhalb des Gehäuseelements aufgenommene Mutter eingeschraubt wird.

6. Haltevorrichtung (29) nach einem der vorhergehenden Ansprüche, wobei das Stützelement (15) mit einer Öffnung (500) versehen ist, die so angeordnet ist, dass ein Bolzenschaft durch die Öffnung und in Eingriff mit einer innerhalb des Gehäuseelements (14) aufgenommenen Mutter gelangen kann.

7. Haltevorrichtung (29) nach einem der vorhergehenden Ansprüche, wobei es sich bei der Ausbildung (23) um eine Bohrung handelt.

8. Haltevorrichtung (29) nach Anspruch 7, wobei die Bohrung (23) eine allgemein gekrümmte Querschnittsform aufweist, die mit mindestens einem Lappenabschnitt (25) versehen ist, und wobei die Bohrung optional mit einer Vielzahl der Lappenabschnitte versehen ist, die in Umfangsrichtung der Querschnittsform der Bohrung verteilt sind.

9. Haltevorrichtung (29) nach einem der vorhergehenden Ansprüche, wobei die Öffnung (19) so angeordnet ist, dass eine Mutter durch die Öffnung in das Gehäuseelement (14) aufgenommen werden kann, und wobei optional die Öffnung in der gegenüberliegenden Oberfläche des Gehäuseelements bereitgestellt wird, und wobei optional
das Gehäuseelement eine Einfassung bildet, die im Wesentlichen eine innerhalb des Gehäuseelements aufgenommene Mutter umschließt, abgesehen von einer Oberfläche der Mutter, die das Bauteil (1) durch die Öffnung berührt.

10. Haltevorrichtung (29) nach einem der vorhergehenden Ansprüche, wobei das Gehäuseelement (14) aus einem korrosionsbeständigen Material gefertigt ist.

11. Befestigungsanordnung (2) mit einer Haltevorrichtung (29) nach einem der vorhergehenden Ansprüche und einer im Gehäuseelement (14) der Haltevorrichtung aufgenommenen Gewindemutter (13), und wobei gegebenenfalls eine Oberfläche der Mutter, die mit dem Bauteil (1) durch die Öffnung (19) im Gehäuseelement in Kontakt gebracht werden kann, mit mindestens einem Vorsprung (203) zur Aufnahme innerhalb einer Bohrung im Bauteil versehen ist, um eine Drehung der Mutter relativ zum Bauteil zu verhindern, wenn ein Bolzen in die Mutter eingeschraubt wird.

12. Bauteil (1), das mit einer Befestigungsanordnung (2) nach Anspruch 11 versehen ist, wobei in dem Bauteil eine Bohrung (9) vorgesehen ist, die von einer ersten Oberfläche (5) zu einer zweiten Oberfläche (6) des Bauteils verläuft, wobei das Gehäuseelement (14) der Befestigungsanordnung an der ersten Oberfläche des Bauteils so angebracht ist, dass eine Oberfläche des Gehäuseelements die erste Oberfläche berührt und das Stützelement (15) der Befestigungsanordnung an dem Gehäuseelement so angebracht ist, dass eine Oberfläche des Stützelements der Oberfläche des Gehäuseelements gegenüberliegt und die zweite Oberfläche des Bauteils so berührt, dass das Gehäuseelement an dem Bauteil durch Klemmen des Bauteils zwischen den gegenüberliegenden Oberflächen des Gehäuseelements und des Stützelements befestigt wird, und wobei optional
das Stützelement durch die Bohrung im Bauteil von der Seite der zweiten Oberfläche des Bauteils geführt wird, und wobei optional
die Haltevorrichtung der Befestigungsanordnung eine Haltevorrichtung nach einem der vorhergehenden Ansprüche ist, wobei eine innerhalb des Gehäuseelements aufgenommene Mutter die erste Seite des Bauteils durch die Öffnung (19) im Gehäuseelement berührt, und wobei optional
die Haltevorrichtung der Befestigungsanordnung eine Haltevorrichtung nach Anspruch 5 ist, wobei die Bohrung (9) des Bauteils mindestens einen ersten Abschnitt aufweist, der so geformt ist, dass er den mindestens einen Vorsprung (203) des Gehäuseelements aufnimmt, um eine Drehung des Gehäuseelements relativ zum Bauteil zu verhindern, wenn ein Bolzen in die Mutter geschraubt wird, und wobei optional
die Bohrung des Bauteils mindestens einen zweiten Abschnitt aufweist, der so geformt ist, dass er den mindestens einen Vorsprung auf der Oberfläche der Mutter aufnimmt, um eine Drehung der Mutter relativ zum Bauteil zu verhindern, wenn eine Schraube in die Mutter geschraubt wird, und wobei optional
das Bauteil ein erstes Bauteil bildet sowie ein zweites Bauteil (4), das mit einer Bohrung (10) versehen ist, die von einer ersten Oberfläche (7) zu einer zweiten Oberfläche (8) des Bauteils verläuft, wobei das erste und zweite Bauteil so angeordnet sind, dass die zweite Oberfläche des ersten Bauteils an die erste Oberfläche des zweiten Bauteils angrenzt und ihr gegenüberliegt und ihre jeweiligen Bohrungen aufeinander ausgerichtet sind, wobei ein Bolzen von der Seite der zweiten Oberfläche des zweiten Bauteils durch die ausgerichteten Bohrungen in Eingriff mit der innerhalb des Gehäuseelements (14) empfangenen Mutter gelangt, und wobei optional
es sich bei der Haltevorrichtung (29) um eine Haltevorrichtung nach Anspruch 7 handelt und wobei der Bolzen mit der Ausbildung des Gehäuseelements in Eingriff steht.

13. Verfahren zum Befestigen einer Befestigungsanordnung (2) nach Anspruch 11 an einem Bauteil (1), das mit einer Bohrung (9) versehen ist, die von einer ersten Oberfläche (5) zu einer zweiten Oberfläche (6) des Bauteils verläuft, wobei das Verfahren die folgenden Schritte umfasst: Befestigen des Gehäuseelements (14) an der ersten Oberfläche des Bauteils, Befestigen des Stützelements (15) an dem Gehäuseelement und Ausrichten des Abstands zwischen den gegenüberliegenden Oberflächen des Gehäuseelements und des Stützelements, sodass das Gehäuseelement an dem Bauteil befestigt wird, indem das Bauteil zwischen den gegenüberliegenden Oberflächen des Gehäuseelements und dem Stützelement eingespannt wird.

14. Verfahren nach Anspruch 13, wobei das Stützelement (15) von der Seite der zweiten Oberfläche (6) des Bauteils durch die Bohrung (9) im Bauteil (1) geführt wird und/oder wobei es sich bei der Haltevorrichtung (29) um eine Haltevorrichtung nach Anspruch 5 handelt, wobei der mindestens eine Vorsprung (203) des Gehäuseelements (14) in mindestens einen ersten Abschnitt der Bohrung im Bauteil aufgenommen wird und/oder wobei mindestens ein Vorsprung an der Mutter in mindestens einen zweiten Abschnitt der Bohrung im Bauteil aufgenommen wird.

15. Verfahren zum Befestigen eines ersten Bauteils (1) an einem zweiten Bauteil (4), umfassend die Schritte des Verfahrens nach einem der Ansprüche 13 bis 14, wobei das Bauteil das erste Bauteil bildet und das Verfahren ferner das Bereitstellen eines zweiten Bauteils umfasst, das eine Bohrung (10) aufweist, die von einer ersten Oberfläche (7) zu einer zweiten Oberfläche (8) des Bauteils verläuft, wobei das erste und zweite Bauteil so angeordnet werden, dass eine zweite Oberfläche (6) des ersten Bauteils an die erste Oberfläche des zweiten Bauteils angrenzt und ihr gegenüberliegt und ihre jeweiligen Bohrungen aufeinander ausgerichtet sind, und wobei ein Bolzen von der Seite der zweiten Oberfläche des zweiten Bauteils durch die ausgerichteten Bohrungen in Eingriff mit der im Gehäuseelement aufgenommenen Mutter gebracht wird und wobei optional die Haltevorrichtung (29) eine Haltevorrichtung nach Anspruch 7 ist und wobei der Bolzen mit der Ausbildung (23) des Gehäuseelements (14) in Eingriff steht.

## Revendications

1. Dispositif de retenue (29) pour positionner un écrou fileté par rapport à un alésage dans un composant (1) pour la fixation d'un boulon fileté, comprenant un élément de logement (14) pour recevoir un boulon fileté et un élément de support (15) qui peut être fixé sur l'élément de logement afin de fixer l'élément de logement sur le composant en serrant le composant entre les surfaces opposées de l'élément de logement et de l'élément de support ; dans lequel l'élément de support peut être fixé à l'élément de logement dans une pluralité de positions dans lesquelles la distance entre les surfaces opposées de l'élément de support et de l'élément de logement est modifiée, et dans lequel l'élément de logement est prévu avec une ouverture (19) à travers laquelle une surface d'un écrou reçu à l'intérieur de l'élément de logement peut être en contact avec le composant et dans lequel l'élément de logement comprend un formation (23) qui peut se mettre en prise avec le boulon, lorsque le boulon est vissé dans un écrou reçu dans l'élément de logement de sorte que l'élément de logement est fixé au boulon.

2. Dispositif de retenue (29) selon la revendication 1, dans lequel l'élément de logement (14) comprend un premier élément de mise en prise (40, 41) et l'élément de support comprend un second élément de mise en prise (126, 127), dans lequel les premier et second éléments de mise en prise peuvent se mettre en prise entre eux dans une pluralité de positions de sorte que l'élément de support (15) peut être fixé à l'élément de logement dans ladite pluralité de positions.

3. Dispositif de retenue (29) selon la revendication 2, dans lequel le premier élément de mise en prise (40, 41) comprend au moins un canal et le second élément de mise en prise (126, 127) comprend au moins une languette qui peut être reçue, de manière coulissante, à l'intérieur du au moins un canal, et optionnellement dans lequel le au moins un canal comprend des premier et second canaux et la au moins une languette comprend des première et seconde languettes qui peuvent être reçues, de manière coulissante, à l'intérieur des premier et second canaux, respectivement.

4. Dispositif de retenue (29) selon la revendication 3, dans lequel le au moins un canal (40, 41) est prévu avec une pluralité de formations réparties le long de la longueur du canal et la au moins une languette (126, 127) est prévue avec au moins une formation de coopération (133) qui peut se mettre en prise avec la pluralité de formations de sorte que l'élément de support (15) peut être fixé sur l'élément de logement (14) dans ladite pluralité de positions, et/ou dans lequel l'élément de support peut être fixé sur l'élément de logement de sorte que les surfaces opposées de l'élément de logement et de l'élément de support sont mobiles l'une vers l'autre, dans ladite pluralité de positions, mais ne peuvent pas s'éloigner les unes des autres par la mise en prise des premier et second éléments de mise en prise.

5. Dispositif de retenue (29) selon l'une quelconque des revendications précédentes, dans lequel l'élément de logement (14) est prévu avec au moins une saillie (203) pour la mise en prise avec un alésage (9) dans le composant (1) afin d'empêcher la rotation de l'élément de logement par rapport au composant lorsqu'un boulon est vissé dans un écrou reçu à l'intérieur de l'élément de logement.

6. Dispositif de retenue (29) selon l'une quelconque des revendications précédentes, dans lequel l'élément de support (15) est prévu avec une ouverture (500) agencée de sorte qu'une tige d'un boulon puisse passer à travers l'ouverture et être mise en prise avec un écrou reçu à l'intérieur de l'élément de logement (14).

7. Dispositif de retenue (29) selon l'une quelconque des revendications précédentes, dans lequel la formation (23) est un alésage.

8. Dispositif de retenue (29) selon la revendication 7, dans lequel l'alésage (23) a une forme transversale généralement incurvée prévue avec au moins une partie à lobe (25), et optionnellement dans lequel l'alésage est prévu avec une pluralité desdites parties à lobe réparties dans la direction circonférentielle de la forme transversale de l'alésage.

9. Dispositif de retenue (29) selon l'une quelconque des revendications précédentes, dans lequel l'ouverture (19) est agencée de sorte qu'un écrou peut être reçu dans l'élément de logement (14) à travers l'ouverture, et optionnellement dans lequel l'ouverture est prévue dans ladite surface opposée dudit élément de logement, et optionnellement :
dans lequel l'élément de logement forme une enceinte qui enferme sensiblement un écrou reçu à l'intérieur de l'élément de logement sauf une surface de l'écrou qui est en contact avec le composant (1) par le biais de l'ouverture.

10. Dispositif de retenue (29) selon l'une quelconque des revendications précédentes, dans lequel l'élément de logement (14) est réalisé à partir d'un matériau résistant à la corrosion.

11. Ensemble de fixation (2) comprenant un dispositif de retenue (29) selon l'une quelconque des revendications précédentes, et un écrou fileté (13) reçu dans l'élément de logement (14) du dispositif de retenue, et optionnellement dans lequel une surface de l'écrou qui peut être en contact avec le composant (1) par le biais de l'ouverture (19) dans l'élément de logement est prévue avec au moins une saillie (203) pour la réception à l'intérieur d'un alésage dans le composant afin d'empêcher la rotation de l'écrou par rapport au composant lorsqu'un boulon est vissé dans l'écrou.

12. Composant (1) monté avec un ensemble de fixation (2) selon la revendication 11, dans lequel un alésage (9) est prévu dans le composant qui s'étend à partir d'une première surface (5) jusqu'à une seconde surface (6) du composant, l'élément de logement (14) de l'ensemble de fixation est monté sur la première surface du composant de sorte qu'une surface de l'élément de logement est en contact avec la première surface et l'élément de support (15) de l'ensemble de fixation est fixé sur l'élément de logement, de sorte qu'une surface de l'élément de support est opposée à la surface de l'élément de logement et est en contact avec la seconde surface du composant de sorte que l'élément de logement est fixé sur le composant en serrant le composant entre lesdites surfaces opposées de l'élément de logement et de l'élément de support, et optionnellement:
dans lequel l'élément de support traverse l'alésage dans le composant, à partir du côté de la seconde surface du composant, et optionnellement:
dans lequel le dispositif de retenue de l'ensemble de fixation est un dispositif de retenue selon l'une quelconque des revendications précédentes, dans lequel un écrou reçu à l'intérieur de l'élément de logement est en contact avec le premier côté du composant par le biais de l'ouverture (19) dans l'élément de logement, et optionnellement:
dans lequel le dispositif de retenue de l'ensemble de fixation est un dispositif de retenue selon la revendication 5, dans lequel l'alésage (9) du composant a au moins une première section qui est formée pour recevoir la au moins une saillie (203) de l'élément de logement afin d'empêcher la rotation de l'élément de logement par rapport au composant, lorsqu'un boulon est vissé dans l'écrou, et optionnellement:
dans lequel l'alésage du composant a au moins une seconde section qui est formée pour recevoir la au moins une saillie sur ladite surface de l'écrou afin d'empêcher la rotation de l'écrou par rapport au composant lorsqu'un boulon est vissé dans l'écrou, et optionnellement :
dans lequel ledit composant forme un premier composant, et un second composant (4) prévu avec un alésage (10) qui s'étend à partir d'une première surface (7) jusqu'à une seconde surface (8) du composant, dans lequel les premier et second composants sont agencés de sorte que la seconde surface du premier composant est adjacente et opposée à la première surface du second composant et leurs alésages respectifs sont alignés, dans lequel un boulon passe du côté de la seconde surface du second composant par les alésages alignés en mise en prise avec l'écrou reçu à l'intérieur de l'élément de logement (14), et optionnellement:
dans lequel le dispositif de retenue (29) est un dispositif de retenue selon la revendication 7 et dans lequel le boulon est mis en prise avec la formation de l'élément de logement.

13. Procédé pour fixer un ensemble de fixation (2) selon la revendication 11 à un composant (1) prévu avec un alésage (9) qui passe d'une première surface (5) à une seconde surface (6) du composant, le procédé comprenant les étapes consistant à monter l'élément de logement (14) sur la première surface du composant, fixer l'élément de support (15) sur l'élément de logement et ajuster la séparation des surfaces opposées de l'élément de logement et de l'élément de support de sorte que l'élément de logement est fixé sur le composant en serrant le composant entre les surfaces opposées de l'élément de logement et de l'élément de support.

14. Procédé selon la revendication 13, dans lequel l'élément de support (15) traverse l'alésage (9) dans le composant (1) à partir du côté de la seconde surface (6) du composant, et/ou dans lequel le dispositif de retenue (29) est un dispositif de retenue selon la revendication 5, dans lequel la au moins une saillie (203) de l'élément de logement (14) est reçue à l'intérieur d'au moins une première section de l'alésage dans le composant et/ou dans lequel au moins une saillie de l'écrou est reçue à l'intérieur d'au moins une seconde section de l'alésage dans le composant.

15. Procédé pour fixer un premier composant (1) sur un second composant (4) comprenant les étapes du procédé selon l'une quelconque des revendications 13 à 14, dans lequel le composant forme le premier composant et le procédé comprend en outre les étapes consistant à prévoir un second composant qui a un alésage (10) qui s'étend à partir d'une première surface (7) jusqu'à une seconde surface (8) du composant, agencer les premier et second composants de sorte qu'une seconde surface (6) du premier composant est adjacente à et opposée à la première surface du second composant et leurs alésages respectifs sont alignés, et faire passer un boulon à partir du côté de la seconde surface du second composant à travers les alésages alignés en mise en prise avec l'écrou reçu à l'intérieur de l'élément de logement, et optionnellement dans lequel le dispositif de retenue (29) est un dispositif de retenue selon la revendication 7, et dans lequel le boulon est mis en prise avec la formation (23) de l'élément de logement (14).
